# EUROPÄISCHE PATENTANMELDUNG

(11) **EP 2 366 657 A2**
(43) Veröffentlichungstag der Anmeldung: **21.09.2011**
(21) Anmeldenummer: 11158392.8
(22) Anmeldetag: 16.03.2011
(51) Int. Cl.: B67C 3/04

(54) **Vorrichtung und Verfahren zum Heißabfüllen von Getränken**

(30) Priorität: 19.03.2010 DE 102010012211
(71) Anmelder: Krones AG, 93073 Neutraubling (DE)
(72) Erfinder: Hirdina, Jochen, 93057 Regensburg (DE)
(74) Vertreter: Bittner, Bernhard

(57) **Zusammenfassung**

Die Erfindung betrifft ein Verfahren zum Herstellen von Getränkebehältnissen (10) mit den Schritten,
- Herstellen eines Kunststoffbehältnisses (10), wobei das Kunststoffbehältnis (10) mittels einer Umformungseinrichtung (2) aus einem Kunststoffvorformling erzeugt wird;
- Transportieren des Behältnisses (10) zu einer Fülleinrichtung (4);
- Befüllen des Behältnisses (10) mit einer Flüssigkeit und insbesondere mit einem Getränk, wobei die Flüssigkeit mit einer Temperatur in das Behältnis (10) eingefüllt wird, welche über 50°C liegt;
dadurch gekennzeichnet, dass
das Behältnis (10) zwischen einer einem Preform - Einlauf der Umformungseinrichtung (2) vorgeordneten Vereinzelungseinrichtung und der Fülleinrichtung (4) sterilisiert wird.

## Beschreibung

Die vorliegende Erfindung bezieht sich auf ein Verfahren und eine Vorrichtung zum Herstellen von befüllten Getränkebehältnissen und insbesondere ein Verfahren und eine Vorrichtung, bei denen Getränke heiß abgefüllt werden. Aus dem Stand der Technik ist es bekannt, dass diverse Getränke wie beispielsweise Eistee heiß abgefüllt werden. Diese Heißabfüllung bereitet insbesondere bei Kunststoffbehältern bzw. PET Behältern Probleme. Bei der Heißabfüllung von PET-Behältern stellt nämlich die Thermostabilität des Materials und die Vakuumstabilität des Behälters eine große Herausforderung dar. Das Material PET weist einen relativ niedrigen Glaspunkt von ca. 75°C auf. Dies ist für Fülltemperatur von sensiblen Produkten, welche in der Regel zwischen 85 °C und 92 °C liegt nicht ausreichend. Aus diesem Grunde wird das Material bei der Verarbeitung in der Streckblasmaschine thermisch kristallisiert. Dies wird über eine hohe Vorformlingtemperatur und über geheizte Blasformen (Temperaturen zwischen 120 °C bis 160 °C) realisiert. Dies führt jedoch andererseits zu einem deutlich höheren Energieverbrauch da zusätzlich eine Abkühlung des Behälters vor dem Entformen über Druckluft benötigt wird. Ein weiterer Nachteil ist die eingeschränkte Ausstoßleistung aufgrund der notwendigen Kristallisierungszeit in der Blasform.

Je höher die Abfülltemperatur desto problematischer wird die Thermostabilität und die Ausstoßleistung muss teilweise drastisch gesenkt werden. Daneben führt diese Vorgehensweise zu relativ hohen Behältnisgewichten.

Die DE 36 50 667 T2 beschreibt ein Verfahren zur Herstellung eines heiß befüllbaren deformationsfesten Polyesterbehälters. Dabei wird ein Kunststoffvorformling bereitgestellt, dieser erhitzt und in einem Blasformhohlraum platziert. Weiterhin sind bestimmte Ziehverhältnisse der Wand des Vorformlings einzuhalten, welche zwischen 8:1 und 12:1 liegen. Daneben wird die Temperatur des wieder erhitzten Vorformlings zwischen 82°C und 121°C erhalten.

Die DE 698 02 357 T2 beschreibt eine Vorrichtung zum keimfreien Füllen und Verpacken von Nahrungsmitteln. Diese Vorrichtung weist einen Sterilisierabschnitt zum Sterilisieren von mit festen oder flüssigen Nahrungsmitteln gefüllten Verpackungsbehältern auf sowie einen Verpackungsabschnitt zum hermetischen Versiegeln der Verpackungsbehälter.

Aus der EP 1 559 674 B1 ist eine Füllmaschine mit Flüssigkeitszirkulationen bekannt. Dabei wird auch ein Füllgut heiß in Flaschen abgefüllt und zu einer Vermeidung einer Abkühlung des Füllguts in den Füllelementen wird bei Unterbrechung des Füllprozesses das Füllgut im heißen Zustand in mindestens einem die Füllelemente einschließenden Strömungsweg gefördert.

Aus der US 5,251,424 ist ein weiteres Verfahren zum Heißabfüllen von Getränken bekannt. Auch hier wird ein Kunststoffbehälter zur Verfügung gestellt und anschließend das heiße Getränk in diesen eingefüllt. Anschließend wird der Behälter verschlossen und der Inhalt des Behälters unter einem Druck gehalten.

Aus der DE 195 20 925 A1 ist ein Verfahren zum keimarmen Füllen von Kunststoffflaschen bekannt. Dabei wird jeder Behälter nach dem Füllen und Verschließen einer thermischen Nachbehandlung unterzogen, bei der das Füllgut im Inneren des jeweiligen Behälters auf einer Temperatur von wenigstens 60°C gehalten wird.

Der vorliegenden Erfindung liegt die Aufgabe zugrunde, auch bei heiß abzufüllenden Getränken die jeweiligen Kunststoffbehältnisse soweit wie möglich zu schonen. Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Herstellen von befüllten Getränkebehältissen wird zunächst ein Kunststoffbehältnis hergestellt, wobei das Kunststoffbehältnis mittels einer Umformungseinrichtung aus einem Kunststoffvorformling erzeugt wird. Anschließend wird das Behältnis zu einer Fülleinrichtung transportiert und mit einer Flüssigkeit und insbesondere mit einem Getränk befüllt, wobei die Flüssigkeit mit einer Temperatur in das Behältnis eingefüllt wird, welche über 50°C liegt.

Erfindungsgemäß wird das Behältnis zwischen der Umformungseinrichtung und der Fülleinrichtung, genauer gesagt, zwischen einer einem Preform-Einlauf der Blasmaschine vorgeordneten Vereinzelungseinrichtung zum Vereinzeln der Kunststoffvorformlinge und der Fülleinrichtung wenigstens abschnittsweise sterilisiert. Bevorzugt wird eine Innenwandung des Behältnisses wenigstens abschnittsweise und bevorzugt vollständig sterilisiert. Daneben kann jedoch auch eine wenigstens abschnittsweise Sterilisierung einer Aussenoberfläche des Behältnisses vorgenommen werden. Damit wird bevorzugt im Rahmen dieser Beschreibung diese Vereinzelungseinrichtung zum Vereinzeln der Kunststoffvorformlinge auch als Bestandteil der Umformungseinrichtung angesehen. Bevorzugt ist die Sterilisationseinrichtung zwischen dem Einlauf der Umformungseinrichtung und der Fülleinrichtung angeordnet.

Unter der Blasmaschine wird im Folgenden nicht nur das eigentliche Blasmodul bezeichnet, welches die Kunststoffvorformlinge zu Kunststoffbehältnissen umformt, sondern auch diesem Blasmodul vorgeordnete Vorrichtungen wie insbesondere aber nicht ausschließlich eine Heizeinrichtung bzw. ein Ofen, der die Kunststoffvorformlinge erwärmt. Unter dem Preform - Einlauf kann es sich dabei insbesondere um denjenigen Bereich handeln, an dem die Vorformlinge in die besagte Heizeinrichtung gelangen. Es wäre daher insbesondere auch eine Sterilisation in einem Bereich der Heizeinrichtung möglich. Es wäre jedoch auch möglich, die in der Heizeinrichtung erwärmten Vorformlinge vor, während oder nach ihrem Einlauf in das Blasmodul zu sterilisieren.

Bei der Umformungseinrichtung handelt es sich insbesondere um eine Blasformmaschine und besonders bevorzugt um eine Streckblasmaschine. Die hohe Fülltemperatur ist insbesondere auch mikrobiologischen Gründen erforderlich. Dabei muss das Füllgut auf eine produktabhängige Temperatur geheizt werden um eine ausreichende Sterilisationswirkung gegen die entsprechenden Keimesporen etc. zu erzielen. Durch diese Abtötung von Erregern wird eine längere Haltbarkeitsdauer des Füllguts erreicht. Vorzugsweise wird das Füllgut mit einer Temperatur abgefüllt, welche über 60°C bevorzugt über 70°C und besonders bevorzugt über 75°C liegt.

Um zu gewährleisten, dass auch auf dem Weg des Produkts in das Behältnis und in dem Behältnis alle Erreger abgetötet werden, muss das Produkt heiß abgefüllt und nicht nur im Wege einer Kurzzeiterhitzung sterilisiert werden. Dabei sorgt im Stand der Technik eine gewisse Standzeit der heißen Flüssigkeit in der Flasche, welche in der Regel zwischen einer und fünf Minuten liegt für diese mikrobiologische Sicherheit. Andererseits bewirkt genau diese Standzeit, dass das PET-Behältnis schwierig formstabil zu halten ist, da die Festigkeit des Materials stark herabgesetzt ist.

Mit dem erfindungsgemäß vorgeschlagenem Verfahren wird daher erreicht, dass ein Produkt mikrobiologisch sicher abgefüllt werden kann, ohne dabei den Aufwand einer Aseptik zu benötigen. Die bereits im Stand der Technik beschriebene Heißabfüllung ist aufgrund der hohen Flaschengewichte nur bedingt wirtschaftlich und wird über die vorliegende Erfindung so verbessert, dass sich im Ergebnis ein wirtschaftliches Abfüllverfahren ergibt. Vorteilhaft erfolgt die Sterilisierung des Behältnisses durch eine Beaufschlagung mit einem Sterilisationsmedium und insbesondere mit Wasserstoffperoxidgas.

Vorteilhaft wird das Behältnis in der Umformungseinrichtung sterilisiert. Dabei ist es möglich, dass die Behältnisse in der Umformungseinrichtung beispielsweise der Blasmaschine sterilisiert werden. Dieses Sterilisieren des hergestellten Behältnisses wird nunmehr mit der Heißabfüllung kombiniert um auf diese Weise die notwendige Standzeit des Behältnisses bei heißer Temperatur zu vermeiden.

Bei einem weiteren vorteilhaften Verfahren wird das Behältnis (insbesondere zeitlich unmittelbar) nach dem Befüllen gekühlt. Auf diese Weise ist eine zusätzliche Schonung der Behältnisse möglich. So ist es möglich, dass nach der Fülleinrichtung die Behältnisse direkt in einen Rückkühler geführt werden. Gegenüber dem Stand der Technik wird dabei diejenige Transportstrecke eingespart, die üblicherweise zwischen der Fülleinrichtung und diesem Rückkühler vorhanden ist.

Bei einem weiteren vorteilhaften Verfahren erfolgt die Kühlung der befüllten Behältnisse ohne weitere Kopfraumsterilisation der abgefüllten Behälter. Vorzugsweise erfolgt die Kühlung auf eine Temperatur unter 50°C. Falls Produkte eingefüllt werden, deren Temperatur über 85° liegt, wird auch eine Sterilisation der Fülleinrichtung selbst durch das Produkt erreicht.

Auch können Necksterilisierer eingespart werden. Das Behältnis wird auf diese Weise insbesondere nach der Abfüllung aus dem kritischen Temperaturbereich von über 80 °C heruntergekühlt so dass das PET nicht zu einen geschwächten Zustand übergeht, in dem es forminstabil werden könnte. Bevorzugt werden die Umformungseinheit und die Fülleinrichtung geblockt bzw. synchronisiert betrieben und besonders bevorzugt diese Blöcke durch einen Rückkühler ergänzt.

Vorteilhaft wird das Behältnis durch Beaufschlagung mit einem fließfähigen Medium gekühlt. So kann es beispielsweise mit Wasser bespritzt werden, um auf diese Weise abgekühlt zu werden. Es wäre jedoch auch eine Kühlung mit Luft denkbar.

Bei einem weiteren vorteilhaften Verfahren wird das Behältnis unmittelbar nach dem Füllen verschlossen. Vorteilhaft wird hierbei eine Desinfektion bzw. Sterilisierung der einzelnen Verschlüsse durchgeführt. Auch diese Sterilisierung kann dabei mit einem gasförmigen Medium wie insbesondere aber nicht ausschließlich Wasserstoffperoxid (H₂O₂) erfolgen.

Bei einem weiteren vorteilhaften Verfahren wird der Verschluss des Behältnisses ebenfalls sterilisiert. Vorteilhaft wird der Verschluss vor dem Verschließvorgang sterilisiert. Dabei findet insbesondere eine Sterilisation des Innenraums des Verschlusses statt, also desjenigen Bereichs, der den Innenraum des verschlossenen Behältnisses begrenzt.

Vorteilhaft wird das Behältnis zwischen der Umformungseinrichtung und der Fülleinrichtung durch eine sterile Umgebung transportiert. Auf diese Weise kann erreicht werden, dass das Behältnis nach dem Umformungsvorgang nicht mehr kontaminiert wird. Dabei kann es sich beispielsweise um einen Sterilraum handeln, der sich von der Umformungseinrichtung zu der Fülleinrichtung erstreckt. Vorteilhaft schließt sich daher die Fülleinrichtung auch mit einem relativ kurzen Abstand und besonders bevorzugt direkt an die Umformungseinrichtung an.

Vorteilhaft wird das Behältnis nach dem Befüllen mit einem gasförmigen Medium beaufschlagt. Genauer gesagt wird nach dem Füllvorgang in das Behältnis ein gasförmiges Medium und insbesondere Stickstoff eingeführt. Auf diese Weise ist es möglich, Luft aus dem Kopfraum der Behältnisse zu verdrängen um auf diese Weise auch in dem Kopfraum der Behältnisse Verkeimungen zu verhindern.

Die vorliegende Erfindung ist weiterhin auf eine Vorrichtung zum Herstellen von befüllten Behältnissen gerichtet, wobei diese Vorrichtung eine Umformungseinrichtung aufweist, welche Kunststoffvorformlinge zu Kunststoffbehältnissen umformt. Weiterhin ist auch eine Transporteinrichtung vorgesehen, welche die Kunststoffbehältnisse von der Umformungseinrichtung abtransportiert und weiterhin ist eine entlang eines Transportpfades der Kunststoffbehältnisse stromabwärts bezüglich der Umformungseinrichtung angeordnete Fülleinrichtung vorgesehen, welche die Behältnisse mit einer Flüssigkeit befüllt. Dabei ist die Fülleinrichtung derart gestaltet, dass sie die Flüssigkeit mit einer Temperatur von mehr als 50 °C in die Behältnisse einfüllt.

Vorteilhaft weist die Vorrichtung eine Sterilisationseinrichtung auf , welche zwischen einer einem Preform - Einlauf der Umformungseinrichtung vorgeordneten Vereinzelungseinrichtung (zum Vereinzeln der Kunststoffvorformlinge) und der Fülleinrichtung angeordnet ist und welche die Behältnisse (10) sterilisiert.

Unter einer Anordnung zwischen der Umformungseinrichtung und der Fülleinrichtung wird verstanden, dass dabei die Sterilisationseinrichtung auch noch in einem Bereich der Umformungseinrichtung (bzw. in dem Bereich einer ggfs. vor dieser Umformungseinrichtung angeordneten Vereinzelungseinrichtung zum Vereinzeln der Kunststoffvorformline) angeordnet sein kann, und beispielsweise auch die Kunststoffvorformlinge kurz vor oder auch während des Umformungsvorgangs sterilisiert werden. Vorteilhaft ist jedoch die Sterilisationseinrichtung nach der Umformungseinrichtung angeordnet und sterilisiert daher die bereits gefertigten Behältnisse.

Bei einer vorteilhaften Ausführungsform weist die Vorrichtung eine
Beaufschlagungseinrichtung auf, welche entlang des Transportpfades der Kunststoffbehältnisse nach der Fülleinrichtung angeordnet ist und welche die befüllten Behältnisse mit einem fließfähigen und bevorzugt gasförmigen Medium beaufschlagt. Genauer gesagt wird die in den Behältnissen angeordnete Flüssigkeit mit dem gasförmigen Medium beaufschlagt. Vorteilhaft handelt es sich bei dem gasförmigen Medium um Stickstoff. Dabei ist es möglich, dass dieser Stickstoff auch in flüssiger Form eingebracht wird.

Durch das Einbringen dieses Mediums, insbesondere in gasförmiger Form wird eine Verdrängung des in dem befüllten Behältnis vorhandenen Sauerstoffs bzw. eine Sauerstoffminimierung erreicht. Falls der Stickstoff in flüssiger Form eingebracht wird, kann überdies noch ein Druckaufbau in dem Behältnis erreicht werden, der beispielsweise dem Effekt des sich Zusammenziehens der in dem Behältnis befindlichen Flüssigkeit entgegenwirkt.

Bei einer weiteren vorteilhaften Ausführungsform weist die Vorrichtung eine nach der Fülleinrichtung angeordnete Kühleinrichtung zum Kühlen der befüllten Behältnisse auf. Vorzugsweise kühlt die Kühleinrichtung die Behältnisse auf eine Temperatur, welche zwischen 50°C und 75°C, bevorzugt zwischen 60°C und 75°C und besonders bevorzugt zwischen 65°C und 75°C liegt.

Auf diese Weise wird das Behältnis thermisch nicht mehr so hoch belastet wie im Stand der Technik. Daher kann das Behältnis auch kostengünstiger produziert werden, wobei beispielsweise kein Heatsetverfahren sondern lediglich ein Hotrelaxverfahren Anwendung findet. Weiterhin können die Gewichte der Behältnisse deutlich reduziert werden. Als besonders geeignet haben sich Gewichte der Behältnisse herausgestellt, wie sie bei Aseptik-Anwendungen möglich sind, ohne dass andererseits die hohen Kosten für die Betriebskosten von Aseptikanlagen aufgewandt werden müssen.

Eine Anwendung der Erfindung ist sowohl für eine konventionelle Heißabfüllung als auch für eine Heißabfüllung mit nachfolgender Gasbeaufschlagung (Seitens der Anmelderin auch als NitroHotFill bezeichnet) möglich. Insbesondere für das letztgenannte Verfahren ist von hoher Effizienz auszugehen.

Vorteilhaft ist vor der Kühleinrichtung eine Verschließeinrichtung zum Verschließen der Behältnisse angeordnet. Dies bedeutet, dass bevorzugt die Behältnisse zunächst befüllt, anschließend verschlossen und schließlich gekühlt werden. Vorteilhaft ist der Verschließer im Wesentlichen unmittelbar nach der Beaufschlagungseinrichtung vorgesehen, welche die Flüssigkeit mit dem gasförmigen Medium beaufschlagt.

Bei einer weiteren vorteilhaften Ausführungsform ist zwischen der Umformungseinrichtung und der Fülleinrichtung ein Sterilraum angeordnet, durch den das Behältnis transportiert wird. Durch das Vorsehen dieses Sterilraums wird gewährleistet, dass keine Verschmutzungen des Behältnisses mehr nach deren Herstellung auftreten können. Vorteilhaft schließt sich die Fülleinrichtung im Wesentlichen direkt an die Umformungseinrichtung an. Es kann also vorgesehen sein, dass zwischen der Umformungseinrichtung und der Fülleinrichtung lediglich ein Übergabestern als Transporteinrichtung vorgesehen ist. Auch wäre es möglich, dass die Umformungseinrichtung und die Fülleinrichtung in dem gleichen Gehäuse angeordnet sind.

Bei einer weiteren vorteilhaften Ausführungsform weist die Vorrichtung eine Etikettiereinrichtung auf, welche an dem Behältnis ein Etikett anbringt. Diese Etikettiereinrichtung ist dabei vorteilhaft nach der Verschließeinrichtung angeordnet, welche die bereits befüllten Behältnisse verschließt. Vorteilhafterweise ist die Etikettiereinrichtung auch nach der oben erwähnten Kühleinrichtung zum Kühlen der befüllten Behältnisse vorgesehen.

Zwischen der Fülleinrichtung und der Etikettiereinrichtung kann noch eine Trocknungseinrichtung vorgesehen sein, welche eine Aussenwandung der Behältnisse, beispielsweise durch Beaufschlagung mit einem Luftstrom trocknet. Bei der Etikettiereinrichtung kann es sich um eine Etikettiereinrichtung handeln, welche selbstklebende Etiketten auf den Behältnissen anbringt. Es wären jedoch auch Etikettiereinrichtungen denkbar, welche die Etiketten mittels eines Klebstoffes an den Behältnissen anbringen oder auch solche Etikettiereinrichtungen, welche Schrumpfetiketten an den Behältnissen anbringen.

Weitere Vorteile und Ausführungsformen ergeben sich aus den beigefügten Zeichnungen:
Darin zeigen:
   - Fig. 1: eine Anlage zum Behandeln von Behältnissen aus dem Stand der Technik; und
   - Fig. 2: eine schematische Darstellung einer erfindungsgemäßen Anlage.

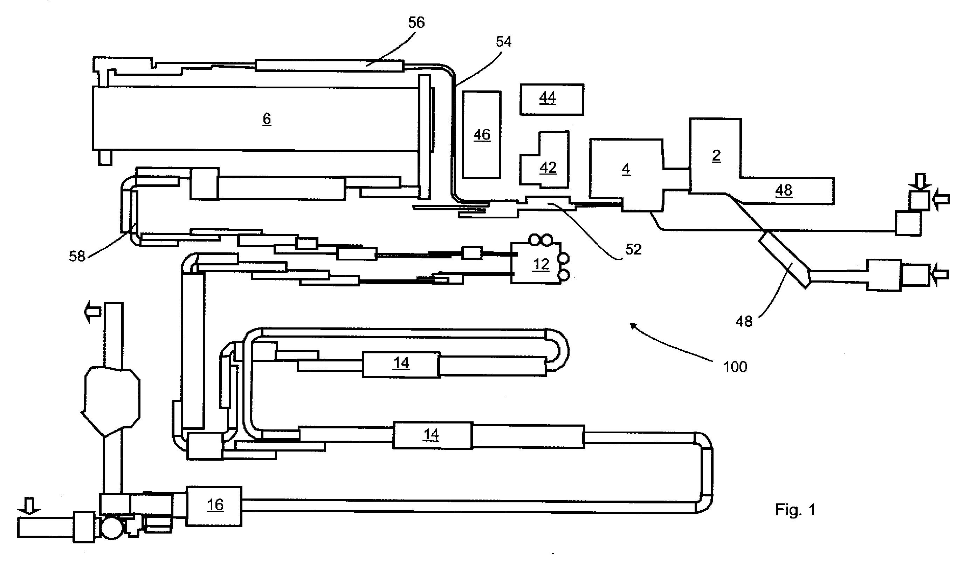

Fig. 1 zeigt ein schematisches Blockdiagramm einer Anlage 100 nach dem Stand der Technik. Dabei ist eine Umformungseinrichtung 2 wie insbesondere eine Streckblasmaschine vorgesehen, welche die Kunststoffvorformlinge zu Kunststoffbehältnissen umformt. Zu diesem Zweck werden die Kunststoffvorformlinge zunächst durch eine Heizeinrichtung 48 wie einen Ofen geführt und anschließend in erwärmten Zustand der Umformungseinrichtung 2 zugeführt. An diese Umformungseinrichtung 2 schließt sich eine Fülleinrichtung 4 an, in der die Behältnisse mit einem Getränk befüllt werden. Im Anschluss an diese Befüllung werden die befüllten Behältnisse über eine Transportstrecke 52, 54 und 56 einem Rückkühler 6 zugeführt. Das Bezugszeichen 56 bezieht sich dabei auf eine Sterilisationseinheit für einen Kopfraum der Behältnisse.

An den Rückkühler 6 schließt sich wiederum eine Transportstrecke 58 für die befüllten und auch verschlossenen Behältnisse an sowie eine Etikettiereinrichtung 12, die die Behältnisse mit Etiketten versieht. Das Bezugszeichen 14 bezieht sich auf Packeinrichtungen, welche beispielsweise aus einer Vielzahl von Behältnissen Zusammenstellungen bilden. Das Bezugszeichen 16 schließlich kennzeichnet einen Palettierer.

Man erkennt, dass die mit dem heißen Getränk befüllten Behältnisse über eine relativ lange Transportstrecke (52, 54, 56) hinweg transportiert werden. Im Stand der Technik kann in diesem Zeitraum das heiße Getränk auf die Behältniswandungen einwirken und diese Wandungen können dadurch instabil werden.

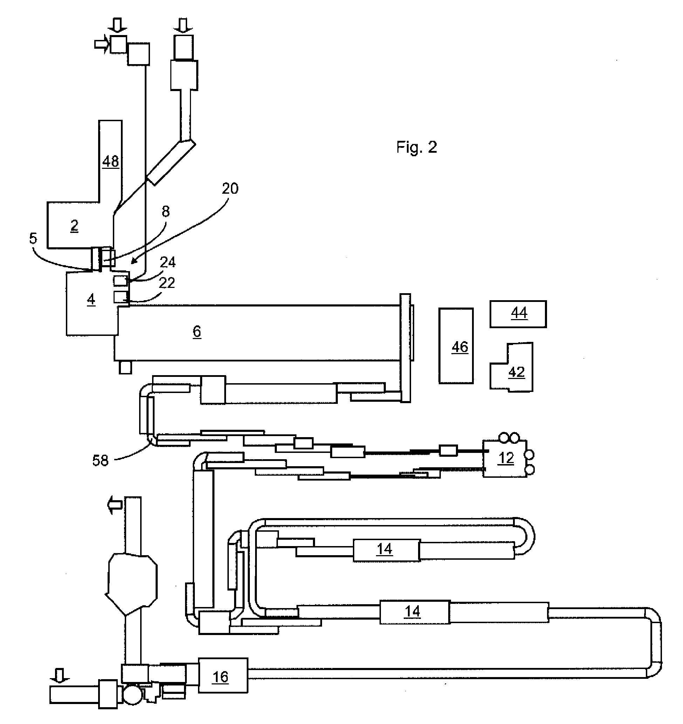

Fig. 2 zeigt eine blockdiagrammartige Darstellung einer erfindungsgemäßen Vorrichtung 1. Auch hier ist wieder eine Umformungseinrichtung 2 und eine Fülleinrichtung 4 vorgesehen. Das Bezugszeichen 5 bezieht sich auf eine Transporteinrichtung, welche die Behältnisse von der Umformungseinrichtung in der Fülleinrichtung fördert. Bei dieser Transporteinrichtung kann es sich beispielsweise um ein Transportband oder eine umlaufende Transportkette handeln.

Zwischen der Umformungseinrichtung 2 und der Fülleinrichtung 4 befindet sich jedoch zusätzlich eine Sterilisationseinrichtung 8, welche die umgeformten Behältnisse sterilisiert. Wie oben erwähnt, kann es sich hierbei um eine Sterilisationseinrichtung handeln, welche die Behältnisse mit Gas, z. B. H₂O₂ beaufschlagt. Verwendbar wären jedoch auch Strahlungseinrichtungen, welche die Behältnisse mit Strahlung wie insbesondere UV-Strahlung, Röntgen-Strahlung oder Elektronen bestrahlen.

Insbesondere wird dabei die Innenwandung der Behältnisse sterilisiert, es wäre jedoch zusätzlich auch eine Sterilisation der Außenwandung denkbar. Das Bezugszeichen 20 bezieht sich auf einen Reinraum, der in dem Bereich zwischen der Umformungseinrichtung 2 und der Fülleinrichtung 4 angeordnet ist. Auf diese Weise wird sichergestellt, dass die umgeformten Behältnisse diesen Sterilraum 20 insbesondere erst wieder in einem geschlossenen Zustand verlassen, in dem Kontaminationen ausgeschlossen sind. Entsprechend bezeichnet das Bezugszeichen 22 einen Verschließer, der die befüllten Behältnisse verschließt.

So wäre es auch möglich, dass die Vorformlinge bereits nach dem Einlaufen in den Ofen, in dem sie für den Blasvorgang erwärmt werden, sterilisiert werden, oder auch während des Durchlaufens durch diesen Ofen. So könnten über einer Transporteinrichtung für die Vorformlinge beispielsweise Düsen angeordnet sein, welche die Vorformlinge mit einem Sterilisationsmittel beaufschlagen. Daneben könnten die Sterilisationseinrichtungen auch nach dem Ofen bzw. zwischen dem Ofen und den eigentlichen Blasstationen angeordnet sein. Durch die Anordnung der Sterilisationseinrichtung kann mittelbar auch die Temperatur bestimmt werden, bei der sich die Wirkung des Sterilisationsmittels entfalten soll. Auch wäre es möglich, mehrere Sterilisationseinrichtungen vorzusehen, welche beispielsweise an unterschiedlichen Orten entlang des Transportpfades der Behältnisse angeordnet sind. Dabei könnten diese unterschiedlichen Sterilisationseinrichtungen auch unterschiedliche Verfahren anwenden, beispielsweise eine Sterilisation mittels UV - oder Elektronenstrahlen und eine weitere Sterilisation mittels H₂O₂. Daneben wäre es auch möglich, dass die Vorformlinge in ein Bad mit Sterilisationsmittel eingetaucht werden so dass auf diese Weise eine Sterilisation sowohl der Innenwandung als auch der Aussenwandung der Vorformlinge vorgenommen wird.

Damit kann sowohl eine Sterilisation der Vorformlinge vorgenommen werden als auch eine Sterilisation der gerade hergestellten Kunststoffbehältnisse. Daneben ist es auch möglich, dass im Rahmen eines Sterilisationsprozesses die Behältnisse mit warmen Wasser gespült werden. Auch können die Aussenbereiche der Behältnisse gespült werden, in dem ein Sterilisationsmittel auf eine Mündung der Behältnisse gerichtet wird. Der Innenraum der Behältnisse kann nach der Beaufschlagung mit dem Sterilisationsmittel auch mit (Steril)luft ausgespült werden.

Zum Zecke der Sterilisation kann auch eine Vielzahl von Sprühdüsen vorgesehen sein, welche das Sterilisationsmittel auf die Oberfläche der Behältnisse richten. Dabei kann der Strahl des Sterilisationsmediums beispielsweise auf die Seitenflächen oder die Bodenfläche der Behältnisse gerichtet werden. Dabei können auch bewegliche Sprühdüsen eingesetzt werden. Auch kann zum Sterilisieren gesättigter Dampf eingesetzt werden. Daneben kann auch durch eine kontinuierliche Beaufschlagung der Oberfläche der Behältnisse eine Sterilisation derselben erreicht werden. Auch das Sterilisationsmittel kann erwärmt werden, bevor die Behältnisse damit beaufschlagt werden.

Unmittelbar an die Fülleinrichtung schließt sich hier die Kühleinrichtung 6 an, welche die befüllten und verschlossenen Behältnisse kühlt. Auf diese Weise wird der in Fig. 1 dargestellte Transportweg 52, 54 und 56 vermieden. Dabei können die Behältnisse beispielsweise auf einem Band und bevorzugt nebeneinander stehend durch diese Kühleinrichtung transportiert werden. In dieser Kühleinrichtung können die Behältnisse dann von aussen mit einem fließfähigen Kühlmittel wie beispielsweise Wasser, ggfs aber auch mit Luft beaufschlagt werden. Daneben kann noch eine Trocknungseinrichtung vorgesehen sein, welche die Aussenwandung der Behältnisse beispielsweise zum Zwecke des Etikettierens trocknet.

Gleichzeitig kann in diesem Bereich auch eine Beaufschlagungseinrichtung 24 vorgesehen sein, welche die befüllten Behältnisse beispielsweise mit Stickstoff beaufschlagt.

Die Einrichtungen nach der Kühleinrichtung 6 entsprechen im Wesentlichen wieder der in Fig. 1 gezeigten Anordnung. Dabei bezieht sich das Bezugszeichen 46 auf eine CIP-Einheit zum Reinigen der Fülleinrichtung. Das Bezugszeichen 42 kennzeichnet eine Pasteurisiereinheit zum Pasteurisieren der Flüssigkeit. Das Bezugszeichen 44 kennzeichnet einen Mixer, der ebenfalls bei einer Vielzahl von Getränken Anwendung finden kann. Durch die erfindungsgemäße Vorgehensweise gelangt ein steriles Behältnis in die Fülleinrichtung. Bevorzugt wird auf dem Transportweg zwischen der Umformungseinrichtung 2 und der Fülleinrichtung 4 darauf geachtet, dass keine neue Kontamination in das Behältnis gelangt.

Hierzu ist es möglich, den Innenraum des Behältnisses (insbesondere mit Stickstoff) zu spülen. Anschließend wird das Behältnis mit der entsprechenden Abfülltemperatur heiß befüllt wobei wie oben erwähnt diese hohe Abfülltemperatur notwendig ist, um die Fülleinrichtung steril zu halten. Das Behältnis selbst ist idealer Weise selbst nicht kontaminiert. Die Verschließeinrichtung 22 ist vorzugsweise mit einer Verschlussdesinfektion ausgestattet. Weiterhin wird das Behältnis wie oben erwähnt auf dem kürzesten Weg insbesondere über ein Transportband direkt in die Kühleinrichtung 6 übergeben und dort auf eine geringere Temperatur abgekühlt. Vorzugsweise werden die Behältnisse vor dem Rückkühler vereinzelt geführt und in dem Rückkühler in einem Behältnisstrom.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Umformungseinrichtung
- 4: Fülleinrichtung
- 6: Rückkühler
- 8: Sterilisationseinrichtung
- 12: Etikettiereinrichtung
- 14: Packeinrichtungen
- 16: Palettierer
- 20: Reinraum
- 22: Verschließer
- 24: Beaufschlagungseinrichtung
- 42: Pasteurisiereinheit
- 44: Mixer
- 46: CIP-Einheit
- 48: Heizeinrichtung
- 52, 54, 56: Transportstrecke
- 100: Vorrichtung, Stand der Technik

## Patentansprüche

1. Verfahren zum Herstellen von Getränkebehältnissen (10) mit den Schritten,
- Herstellen eines Kunststoffbehältnisses (10), wobei das Kunststoffbehältnis (10) mittels einer Umformungseinrichtung (2) aus einem Kunststoffvorformling erzeugt wird;
- Transportieren des Behältnisses (10) zu einer Fülleinrichtung (4);
- Befüllen des Behältnisses (10) mit einer Flüssigkeit und insbesondere mit einem Getränk, wobei die Flüssigkeit mit einer Temperatur in das Behältnis (10) eingefüllt wird, welche über 50°C liegt;
**dadurch gekennzeichnet, dass**
das Behältnis (10) zwischen einer einem Preform - Einlauf der Umformungseinrichtung (2) vorgeordneten Vereinzelungseinrichtung für die Kunststoffvorformlinge und der Fülleinrichtung (4) sterilisiert wird.

2. Verfahren nach Anspruch 1,
**dadurch gekennzeichnet, dass**
das Behältnis (10) in der Umformungseinrichtung (2) sterilisiert wird.

3. Verfahren nach wenigstens einem der vorangegangenen Ansprüche,
**dadurch gekennzeichnet, dass**
das Behältnis (10) nach dem Befüllen gekühlt wird.

4. Verfahren nach Anspruch 3,
**dadurch kennzeichnet, dass**
das Behältnis (10) durch Beaufschlagung mit einem fließfähigen Medium gekühlt wird.

5. Verfahren nach wenigstens einem der vorangegangenen Ansprüche,
**dadurch gekennzeichnet, dass**
das Behältnis (10) unmittelbar nach dem Füllen verschlossen wird.

6. Verfahren nach wenigstens einem der vorangegangenen Ansprüche,
**dadurch gekennzeichnet, dass**
ein Verschluss des Behältnisses (10) ebenfalls sterilisiert wird.

7. Verfahren nach wenigstens einem der vorangegangenen Ansprüche,
**dadurch gekennzeichnet, dass**
das Behältnis (10) zwischen der Umformungseinrichtung (2) und der Fülleinrichtung (4) durch eine sterile Umgebung transportiert wird.

8. Vorrichtung (1) zum Herstellen von befüllten Behältnissen (10) mit einer Umformungseinrichtung, welche Kunststoffvorformlinge zu Kunststoffbehältnissen (10) umformt, mit einer Transporteinrichtung (5), welche die Kunststoffbehältnisse von der Umformungseinrichtung (2) abtransportiert und mit einer entlang eines Transportpfades der Kunststoffbehältnisse (10) stromabwärts bezüglich der Umformungseinrichtung (2) angeordneten Fülleinrichtung (4), welche die Behältnisse (10) mit einer Flüssigkeit befüllt, wobei die Fülleinrichtung (4) derart gestaltet ist, dass sie die Flüssigkeit mit einer Temperatur von mehr als 50°C in die Behältnisse einfüllt,
**dadurch gekennzeichnet, dass**
die Vorrichtung eine Sterilisationseinrichtung (8) aufweist , welche zwischen einer einem Preform - Einlauf der Umformungseinrichtung (2) vorgeordneten Vereinzelungseinrichtung und der Fülleinrichtung angeordnet ist und welche die Behältnisse (10) sterilisiert.

9. Vorrichtung nach Anspruch 7,
**dadurch gekennzeichnet, dass**
die Vorrichtung (1) eine Beaufschlagungseinrichtung aufweist, welche entlang des Transportpfades der Behältnisse (10) nach der Fülleinrichtung (4) angeordnet ist und welche die befüllten Behältnisse (10) mit einem fließfähigen Medium beaufschlagt.

10. Vorrichtung (1) nach Anspruch 7,
**dadurch gekennzeichnet, dass**
die Vorrichtung (1) eine nach der Fülleinrichtung (4) angeordnete Kühleinrichtung (6) zum Kühlen der befüllten Behältnisse (10) aufweist.

11. Vorrichtung (1) nach Anspruch 7,
**dadurch gekennzeichnet, dass**
zwischen der Umformungseinrichtung (2) und der Fülleinrichtung (4) ein Sterilraum angeordnet ist, durch den das Behältnis transportiert wird.
